# NEUE EUROPÄISCHE PATENTSCHRIFT

(11) **EP 1 738 233 B2**
(45) Veröffentlichungstag und Bekanntmachung des Hinweises auf die Entscheidung über den Einspruch: **29.10.2014**
(45) Hinweis auf die Patenterteilung: 28.05.2008
(21) Anmeldenummer: 05733921.0
(22) Anmeldetag: 13.04.2005
(51) Int. Cl.: G05B 19/042, G05B 19/05

(54) **SICHERHEITSSTEUERUNG**
SAFETY-ORIENTED CONTROL SYSTEM
DISPOSITIF DE COMMANDE DE SECURITE

(30) Priorität: 19.04.2004 DE 102004018857
(43) Veröffentlichungstag der Anmeldung: 03.01.2007
(73) Patentinhaber: Beckhoff Automation GmbH, 33415 Verl (DE)
(72) Erfinder: BÜTTNER, Holger, 12157 Berlin (DE); SACHS, Jens, 32469 Petershagen (DE)
(74) Vertreter: Wilhelm, Jürgen
(86) Internationale Anmeldenummer: PCT/EP2005/003853
(87) Internationale Veröffentlichungsnummer: WO 2005/101145

(56) Entgegenhaltungen:
- EP-A- 1 043 640
- EP-A2- 1 043 640
- WO-A-02/50637
- WO-A2-03/023561
- DE-A1- 10 211 941
- US-B1- 6 711 698
- STERLE L A: "CONSIDERATIONS IN APPLYING PROGRAMMABLE CONTROLLERS IN SAFETY SYSTEM APPLICATIONS" ADVANCES IN INSTRUMENTATION AND CONTROL, INSTRUMENT SOCIETY OF AMERICA, RESEARCH TRIANGLE PARK, US, Bd. 45, Nr. PART 3, Januar 1990 (1990-01), Seiten 1295-1304, XP000172075 ISSN: 1054-0032
- 'Profile for Safety Technology Version 1.30, June 2004' PROFIBUS SPECIFICATION, PROFISAFE 19 Juli 2004, Seiten 2 - 75
- W. LAWRENZ: 'CAN Controller Area Network', Bd. 2, 1997 Seiten 86-89 - 92-93

## Beschreibung

Die Erfindung betrifft ein Verfahren und eine Vorrichtung zum Steuern von Sicherheitsfunktionen im Rahmen einer nicht auf Sicherheitsfunktionen ausgerichteten Systemsteuerung zum Einsatz in Automatisierungssystemen.

Eine essenzielle Anforderung an einen Automatisierungsrechner zum Steuern von Maschinen ist die Sicherheit und Zuverlässigkeit. Insbesondere muss dabei sichergestellt sein, dass vom Automatisierungssystem, auch wenn es ausfällt, keine Gefahr für Mensch und Umwelt ausgeht. Automatisierungssysteme arbeiten deshalb in der Regel nach dem sogenannten Fail-Safe-Prinzip, gemäß dem das Automatisierungssystem beim Ausfall wichtiger Komponenten in einen sicheren Zustand übergeht. Aufgabe des Automatisierungsrechners beim Ausführen von sicherheitsrelevanten Steuerungsfunktionen nach dem Fail-Safe-Prinzip ist es dabei, dass die Prozesssignale zum Ausführen der Steuerungsfunktionen aktuell und nicht verfälscht verarbeitet werden und den Aktoren des Automatisierungssystems immer ein sicherer Prozesszustand angezeigt wird.

Bei der Automatisierungssteuerung ist die Anzahl der sicherheitsrelevanten Steuerfunktionen in der Regel jedoch wesentlich geringer als die Anzahl der nicht-sicherheitsrelevanten Steuerungsfunktionen, die zum Aufrechterhalten des regulären Betriebs des Automatisierungssystems dienen. Um zu gewährleisten, dass die Funktionalitäten von sicherheitsrelevanten Steuerungsfunktionen nicht durch nicht-sicherheitsrelevante Steuerungsfunktionen im Automatisierungsrechner beeinflusst werden, sind die sicherheitsrelevanten Steuerungsfunktionen herkömmlicherweise in einem eigenständigen gegen die nicht-sicherheitsrelevanten Steuerungsfunktionen abgeschotteten Sicherheitsprogramm zusammengefasst. Um eine vollständige Trennung von sicherheitsrelevanten und nicht-sicherheitsrelevanten Funktionen zu erreichen, werden die Sicherheitsprogramme in der Regel auf einem eigenständigen Automatisierungsrechner ausgeführt, der oft auch mit einer eigenen Verdrahtung mit den Not-Aus-Schaltern, Lichtschranken und weiteren Komponenten, die die Maschinensicherheit gewährleisten, verbunden ist.

Um den Hardwareaufwand bei Automatisierungsrechnern zu reduzieren sind weiterhin Steuerungen für Automatisierungssysteme, wie das Simatik-System der Firma Siemens bekannt, bei denen ein Sicherheitsprogramm und nicht-sicherheitsrelevante Funktionen auf denselben Hardwarekomponenten realisiert werden können. Hierbei kann der herkömmliche Automatisierungsrechner zur Ausführung der nicht-sicherheitsrelevanten Funktionen um ein Sicherheitsprogramm erweitert werden. Die Erweiterung des Automatisierungsrechners mit dem Sicherheitsprogramm ist jedoch nur im Rahmen einer genau festgelegten Konfigurations- und Datenverarbeitungsumgebung, bei Simatik-System der STEP7-Runtime, möglich.

Die EP-A-1 043 640 beschreibt ein fehlersicheres Automatisierungssystem, bei dem Sicherheitsfunktionen auf nicht auf Sicherheitsfunktionen ausgelegten Standardbaugruppen ablaufen können, wobei auf den Baugruppen dann ein Sicherheitsprogramm, ein sogenanntes F-Anwenderprogramm mit einer fehlerfreien Funktionalität ausgeführt wird. Die auf den einzelnen Baugruppen laufenden Sicherheitsprogramme können daher über ein Sicherheitsprotokoll einen Datenaustausch miteinander und mit Peripheriegeräten durchführen. Auf jeder Baugruppe läuft jedoch immer nur ein Sicherheitsprogramm neben den Standardanwenderprogrammen bzw. dem Betriebssystem ab.

Aus der WO 02/50637 ist weiterhin ein Verfahren bekannt, das es ermöglicht, nicht-relevante Steuerungsfunktionen über eine sichere Programmhülle in Sicherheitsprogramme einzubinden. Jedoch auch hier gilt die Einschränkung, dass die Integration von Sicherheitsprogrammen und nicht-sicherheitsrelevanten Steuerungsprogrammen auf einem gemeinsamen Automatisierungsrechner nur in einer genau definierten Programmumgebung zulässig ist, nicht jedoch in einer beliebigen BetriebssystemUmgebung z. B. den Windows-Betriebsprogrammen, ausgeführt werden darf.

Allgemeine Anforderung an Sicherheitsprogramme, die nach dem Fail-Safe-Prinzip arbeiten, ist es weiterhin, die Wahrscheinlichkeit eines Programmfehlers möglichst gering zu halten. Zielsetzung bei der Entwicklung von Sicherheitsprogrammen ist es deshalb die Komplexität des Sicherheitsprogramms möglichst zu reduzieren, was jedoch bei den herkömmlichen geschlossenen Sicherheitsprogrammen, die gegen nicht-sicherheitsrelevante Steuerungsfunktionen abgeschottet sein sollen, nicht ohne weiteres gewährleistet werden kann. Dies gilt insbesondere dann, wenn die Sicherheitsprogramme in programmierbaren Steuerungen eingesetzt werden sollen.

Aufgabe der Erfindung ist es, ein Verfahren und eine Vorrichtung zum Steuern von Sicherheitsfunktionen im Rahmen einer nicht auf Sicherheitsfunktionen ausgerichteten Systemsteuerung bereitzustellen, bei denen sich das die Sicherheitsfunktionen zusammenfassende Sicherheitsprogramm durch eine geringe Komplexität auszeichnet und in beliebiger unsicherer Programmumgebung ablaufen kann, ohne dass Fehler bei der Steuerung nicht-sicherheitsrelevanter Steuerungsfunktionen zu einem Fehler beim Steuern von Sicherheitsfunktionen führen.

Diese Aufgabe wird erfindungsgemäß durch ein Verfahren gemäß Anspruch 1 und eine Vorrichtung gemäß Anspruch 11 gelöst. Bevorzugte Weiterbildungen sind in den abhängigen Ansprüchen angegeben.

Gemäß der Erfindung sind zum Steuern von Sicherheitsfunktionen im Rahmen einer nicht auf Sicherheitsfunktionen ausgerichteten Systemsteuerung in einem Automatisierungssystem Sicherheitsmodule mit einer fehlerfreien Funktionalität und ein Sicherheitsprotokoll, das eine Datenübertragung in Form von Sicherheitstelegrammen durchführt, vorgesehen, wobei Eingangs- und Ausgangsparameter jedes Sicherheitsmoduls durch das Sicherheitsmodul gekapselt und die einzelnen Sicherheitsmodule über eine Datenübertragungsstrecke entsprechend den zu steuernden Sicherheitsfunktionen des Systems daten- und ablauftechnisch miteinander verknüpft sind, wobei der Datenaustausch zwischen den Sicherheitsmodulen auf der Grundlage des Sicherheitsprotokolls erfolgt.

Gemäß der Erfindung ist es möglich, ein nach dem Fail-Safe-Prinzip arbeitendes Sicherheitsprogramm zur Steuerung eines Automatisierungssystems in kleine Sicherheitsmodule aufzuteilen, deren Programmkomplexität beschränkt ist, wodurch die Wahrscheinlichkeit eines Programmfehlers reduziert wird. Diese Sicherheitsmodule können weiterhin in einer unsicherer Steuerungsumgebung, d. h. auf einem Automatisierungsrechner mit einem beliebigen Betriebsprogramm zur Ausführung nicht-sicherheitsrelevanter Steuerungsfunktionen ablaufen, ohne dass Fehler, die bei den nicht-sicherheitsrelevanten Steuerungsfunktionen auftreten, zu einem Fehler beim Steuern der Sicherheitsfunktionen führen. Weiterhin können die nicht-sicherheitsrelevanten Steuerungsfunktionen bzw. die Steuerungsprogramme, mit der diese Steuerungsfunktionen ausgeführt werden, jederzeit geändert werden, ohne dass die Funktionalität der gekapselten Sicherheitsmodule beeinträchtigt wird.

Die erfindungsgemäße Kapselung der Eingangs- und Ausgangsparameter jedes Sicherheitsmoduls durch das Sicherheitsprotokoll und der Datenaustausch zwischen den einzelnen Sicherheitsmodulen auf der Grundlage des Sicherheitsprotokolls gewährleistet, dass eine Verfälschung von Daten bei der Datenübertragung zwischen den Sicherheitsmodulen, z. B. aufgrund einer Störung, mit einer für die Sicherheitstechnik ausrechnenden Wahrscheinlichkeit erkannt wird, so dass die zwischen den Sicherheitsmodulen übertragenen Daten als sichere Prozessdaten zur Ausführung von Sicherheitsfunktionen nach dem Fail-Safe-Prinzip genutzt werden können. Durch die Verwendung eines Sicherheitsprotokolls und die Kapselung der Sicherheitsmodule ist es möglich, eine Datenübertragung zwischen zwei Sicherheitsmodulen auf einem beliebigen Übertragungsweg, also in jeder Betriebssystemumgebung, auszuführen, ohne dass zusätzliche Sicherheitsanforderungen an dieses Betriebssystem gestellt werden müssen.

Gemäß einer Ausführungsform der Erfindung enthält das Sicherheitsprotokoll zur Übertragung der Sicherheitstelegramme Mechanismen gegen folgende Fehlerarten bei den zu übertragenen Daten: Wiederholung, Verlust, Einfügung, falsche Datenabfolge, Datenverfälschung, Datenverzögerung, Kopplung sicherheitsrelevanter und nicht-sicherheitsrelevanter Daten und Falschadressierung. Das Sicherheitsprotokoll kann so alle Störungen oder Verfälschungen beim Datenaustausch zwischen den einzelnen Sicherheitsmodulen mit der für die Sicherheitstechnik notwendigen Wahrscheinlichkeit erkennen. Als Sicherheitsmaßnahmen werden dabei vom Sicherheitsprotokoll mittels eines Datenrahmens für die Sicherheitstelegramme folgende Maßnahmen bevorzugt ausgeführt: Fortlaufenden Durchnummerierung der Sicherheitstelegramme, Zeitüberwachung der Sicherheitstelegrammübertragung, Authentizitätsüberwachung der Sicherheitstelegrammübertragung und Sicherung der Datenintegrität der Sicherheitstelegramme mittels einer Prüfsumme.

Gemäß einer weiteren bevorzugten Ausführungsform werden die Sicherheitsfunktionen durch einen logische Verknüpfung der Eingangs- und Ausgangsparameter der Sicherheitsmodule realisiert. Hierdurch wird gewährleistet, dass beliebige Sicherheitsfunktionen mit kleinen Sicherheitsmodulen, die sich durch eine reduzierte Komplexität und damit geringe Fehleranfälligkeit auszeichnen, durchgeführt werden können.

Gemäß einer weiteren bevorzugten Ausführungsform wird die fehlerfreie Funktionalität der Sicherheitsmodule dadurch gewährleistet, dass ein Datenwert selbstständig den sicheren Zustand am Ausgang signalisiert, wenn ein falscher oder kein Datenwert am Eingang empfangen wird. Diese Vorgehensweise stellt das Fail-Safe-Prinzip bei der Ausführung der Sicherheitsfunktion sicher.

Eine verbesserte Sicherheit des Datenaustausches zwischen den Sicherheitsmodulen wird weiterhin dadurch erreicht, dass die Eingangs- und Ausgangsparameter jedes Sicherheitsmoduls im Rahmen eines Initialisierungsvorgangs festgelegt und im entsprechenden Sicherheitsmodul vor unberechtigtem Zugriff geschützt gespeichert werden. Diese Vorgehensweise sichert eine zuverlässige Verkapselung der Sicherheitsmodule.

Eine weitere Erhöhung der Sicherheit wird dadurch erreicht, dass die Datenübermittlung auf der Datenübertragungsstrecke zyklisch und deterministisch erfolgt, wobei die Daten für die Sicherheitsmodule priorisiert behandelt werden, so dass in einem Übermittlungszyklus zuerst alle Daten für die Sicherheitsmodule und dann Daten für Nicht-Sicherheitsfunktionen übertragen werden.

Die Erfindung wird anhand der beigefügten Zeichnungen näher erläutert. Es zeigen:
Figur 1 die Grundstruktur eines Automatisierungssystems;
Figur 2 ein Steuerungsprogramm für ein Automatisierungssystem, umfassend sicherheitsrelevante Steuerungsfunktionen und nicht-sicherheitsrelevante Steuerungsfunktionen;
Figur 3 ein erfindungsgemäßes Sicherheitsmodul in Funktionsblockdarstellung;
Figur 4 ein Datenfluss und Abarbeitungsplan für die sicherheitsrelevanten Steuerungsfunktionen im Steuerprogramm gemäß Figur 2; und
Figur 5 eine Datenschnittstelle für die Verknüpfung der Sicherheitsmodule M2 und M4 gemäß Figur 4.

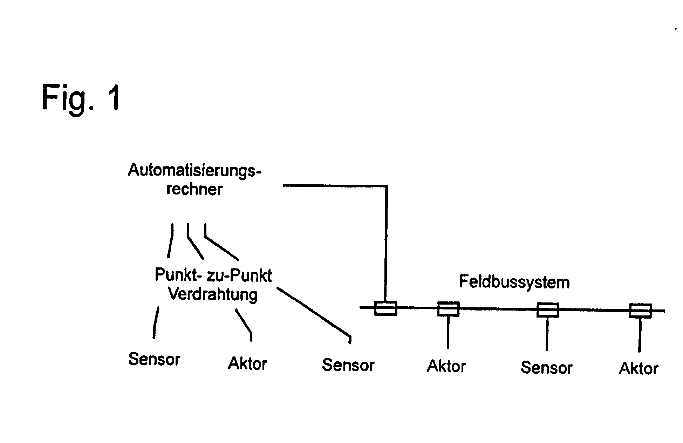

In Figur 1 ist die Grundstruktur eines Automatisierungssystems dargestellt. Ein Automatisierungsrechner kann durch Punkt-zu-Punkt-Verbindung oder einem Bussystem mit Sensoren und Aktoren verbunden sein, um auf der Grundlage von den Sensoren erfassten Prozesssignalen mit Hilfe eines Steuerungsprogramms automatisch Prozesssignale für die Aktoren auszugeben. Eine wichtige Anforderung an das vom Automatisierungsrechner ausgeführte Steuerungsprogramm neben der Echtzeitfähigkeit, d. h. der Forderung, dass der Automatisierungsrechner die Prozesssignale an die Aktoren innerhalb der festgelegten Prozesszeiten ausgibt, ist es sicherzustellen, dass bei einem Ausfall des Automatisierungssystems keine Gefahr für Mensch und Umwelt droht. Der Automatisierungsrechner muss deshalb neben normalen Steuerungsfunktionen noch Sicherheitsfunktionen ausführen, die beim Ausfall wichtiger Komponenten des Automatisierungssystems gewährleisten, dass das Automatisierungssystem nach dem sogenannten Fail-Safe-Prinzip automatisch in einen sicheren Zustand übergeht. Solche Sicherheitsfunktionen sind z. B. Not-Aus-Schaltungen bei Maschinen.

Die Anzahl der Sicherheitsfunktionen in einem auf dem Automatisierungsrechner ablaufenden Steuerungsprogramm sind in der Regel geringer als die Anzahl der nicht-sicherheitsrelevanten Steuerungsfunktionen. Bei der Ausführung der Sicherheitsfunktionen ist deren fehlerfreier Ablauf zu gewährleisten. Insbesondere ist darauf zu achten, dass die nicht-sicherheitsrelevanten Steuerungsfunktionen die Funktionalität der Sicherheitsfunktionen nicht beeinflussen. Dies gilt insbesondere auch dann, wenn die Programmumgebung in der die Sicherheitsfunktionen auf dem Steuerungsrechner ausgeführt werden, also das Betriebsprogramm des Automatisierungsrechners, keinerlei Sicherheitsstandards unterliegen.

Gemäß der Erfindung werden zum Steuern von Sicherheitsfunktionen im Rahmen einer nicht aus Sicherheitsfunktionen ausgerichteten Automatisierungssteuerung Sicherheitsmodule mit fehlerfreier Funktionalität gebildet, wobei die Eingangs- und Ausgangsparameter jedes Sicherheitsmoduls durch ein Sicherheitsprotokoll, das eine Datenübertragung in Form von Sicherheitstelegrammen durchführt, gekapselt sind und die einzelnen Sicherheitsmodule über eine Datenübertragungsstrecke entsprechend den zu steuernden Sicherheitsfunktionen des Automatisierungssystems daten- und ablauftechnisch miteinander verknüpft sind, wobei der Datenaustausch zwischen den Sicherheitsmodulen auf der Grundlage des Sicherheitsprotokolls erfolgt.

Erfindungsgemäß wird also das Sicherheitsprogramm zum Ausführen der Sicherheitsfunktionen in kleine Funktionseinheiten mit begrenzten Funktionsumfang unterteilt, wodurch der Entwicklungsaufwand für das Sicherheitsprogramm reduziert wird. Um eine fehlerfreie Funktionalität von Sicherheitsprogrammen zu gewährleisten, ist es Anforderung, die Wahrscheinlichkeit eines Programmfehlers unterhalb einer Sicherheitsschwelle zu halten. Nur dann werden Sicherheitsprogramme auch zertifiziert. Diese Anforderung lässt sich gegenüber einem geschlossenen Sicherheitsprogramm einfacher und kostengünstiger mithilfe der erfindungsgemäßen Sicherheitsmodule erreichen, die nur eine begrenzte Funktionalität und damit begrenzten Programmkomplexität aufweisen. Die Sicherheitsmodule sorgen für einen fehlerfreien Datendurchlauf und sind so ausgelegt, dass am Ausgang selbstständig einen Datenwert ausgegeben wird, der einen sicheren Zustand signalisiert, wenn ein falscher oder kein Datenwert am Eingang des Sicherheitsmoduls empfangen wird.

Das erfindungsgemäße Sicherheitsprotokoll sorgt dafür, dass die Eingangs- und Ausgangsparameter jedes Sicherheitsmoduls gekapselt sind und somit nicht verfälscht werden können. Darüber hinaus gewährleistet das Sicherheitsprotokoll einen sicheren Datenaustausch zwischen den einzelnen Sicherheitsmodulen in Form von Sicherheitstelegrammen, wobei das Sicherheitsprotokoll die Sicherheitsmodule entsprechend den zu steuernden Sicherheitsfunktionen daten- und ablauftechnisch miteinander verknüpft. Die Sicherheitsfunktionen können so in einer unsicheren Programmumgebung, in der auch nicht-sicherheitsrelevante Steuerungsfunktionen enthalten sind, ausgeführt werden. Der Automatisierungsrechner kann also auf ein beliebiges Betriebsprogramm aufgesetzt werden, das selbst den Anforderungen der Sicherheitstechnik an ein Fail-Safe-Programm nicht genügen muss. Das Sicherheitsprotokoll sichert die zu übertragenen Daten dabei so, dass eine Verfälschung bei der Datenübertragung mit einer für die Sicherheitstechnik ausreichenden Wahrscheinlichkeit erkannt wird. Mit dem erfindungsgemäßen Sicherheitsprotokoll ist es dabei möglich die Daten auf einen beliebigen Datenübertragungsweg zwischen den Sicherheitsmodulen zu übertragen. Weiterhin ermöglicht das Sicherheitsprotokoll eine beliebige Verknüpfung der Sicherheitsmodule, was insbesondere bei programmierbaren Steuerungen von Vorteil ist, da sich so die dann erforderliche Vielfalt von möglichen Verknüpfungen nicht mehr in einer erhöhten Komplexität des Sicherheitsprogramms niederschlägt.

Das Sicherheitsprotokoll enthält zur sicheren Übertragung der Sicherheitstelegramme Mechanismen gegen folgende Fehlerarten: Wiederholung, Verlust, Einfügung, falsche Datenabfolge, Verfälschung der Daten, Datenverzögerung, Kopplung sicherheitsrelevanter und nicht-sicherheitsrelevanter Daten und falsch Adressierung. Als Sicherheitsmaßnahmen wird dabei ein Datenrahmen für die Sicherheitstelegramme eingesetzt, der folgende Sicherheitsmaßnahmen ausführt: Fortlaufende Durchnummerierung der Sicherheitstelegramme, Überwachung einer Zeitüberschreitung bei der Übertragung der Sicherheitstelegramme, Authentizitätsüberwachung der Sicherheitstelegramme vorzugsweise mittels Passwörtern und Sicherung der Datenintegrität der Sicherheitstelegramme mittels einer Prüfsumme.

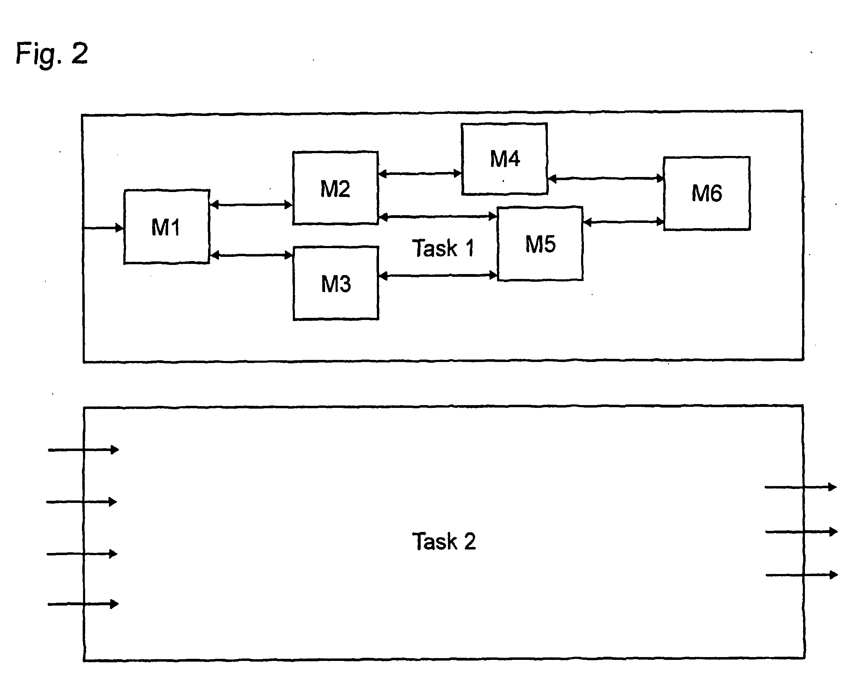

Figur 2 zeigt ein mögliches Steuerungsprogramm für einen Automatisierungsrechner, der sowohl Sicherheitsfunktionen als auch nicht-sicherheitsrelevante Steuerungsaufgaben beinhaltet. Die sicherheitsrelevanten Steuerungsfunktionen werden dabei in einer Task 1 zusammengefasst, die nicht-sicherheitsrelevanten Funktionen in einer Task 2. Der Datenaustausch zwischen dem Automatisierungsrechner und den angeschlossenen Aktoren und Sensoren erfolgt dabei zyklisch und deterministisch, wobei die Daten für die Sicherheitsmodule priorisiert behandelt werden, so dass in einem Übermittlungszyklus zuerst alle Daten für die Sicherheitsmodule und dann die Daten für Nicht-Sicherheitsfunktionen übergeben werden.

In der gezeigten Ausführungsform, ist die Sicherheitstask 1 in sechs Sicherheitsmodule M1 bis M6 unterteilt, die für sich verkapselt sind und zwischen denen ein bi-direktionaler Datenaustausch - durch bi-direktionale Pfeile gekennzeichnet - mithilfe des Sicherheitsprotokolls erfolgt. Das Sicherheitsmodul M1 bildet dabei die Eingangsschnittstelle für Prozesssignale mit sicherheitsrelevanten Daten der Sensoren und das Sicherheitsmodul M6 die Ausgangsschnittstelle für Prozesssignale zum Steuern des Fail-Safe-Zustandes der angeschlossenen Aktoren. Die sechs Sicherheitsmodule M1 bis M6 sind dabei logisch so miteinander verknüpft, dass die gewünschten Sicherheitsfunktionen des Automatisierungssystems ausgeführt werden. Die Steuerungstask 2 enthält alle nicht-sicherheitsrelevanten Steuerungsfunktionen, wobei der Datenaustausch u-nidirektional erfolgt, mit einer Schnittstelle zum Eingeben von Prozesssignalen der Sensoren und einer Schnittstelle zum Ausgeben von Prozesssignalen an die Aktoren. Das Steuerungsprogramm mit den sicherheitsrelevanten und den nicht-sicherheitsrelevanten Steuerungsfunktionen kann dabei in einer beliebigen Betriebssystemumgebung, das selbst keinen Sicherheitsanforderungen unterliegt, also auch nicht zertifiziert sein muss, ausgeführt werden.

Die in Figur 2 gezeigten Sicherheitsmodule M1 bis M6 sind im Betriebssystem vorzugsweise in einer Library zusammengefasst und können von anderen Steuerungsprogrammen über Funktionsaufrufe angesprochen werden. Die Komplexität der Sicherheitsmodule kann dabei unterschiedlich, z. B. eine boolsche Verknüpfungsfunktion oder eine einfache Regelfunktion sein. Die einzelnen Sicherheitsmodule gewährleisten dabei je nach vorgegebener Sicherheitsanforderung eine sichere Funktionalität des Datendurchlaufes. Die sichere Kommunikation zwischen den Sicherheitsmodulen wird durch das Sicherheitsprotokoll erreicht. Hierzu sind sämtliche Eingangs- und Ausgangsparameter der Sicherheitsmodule vom Sicherheitsprotokoll gekapselt.

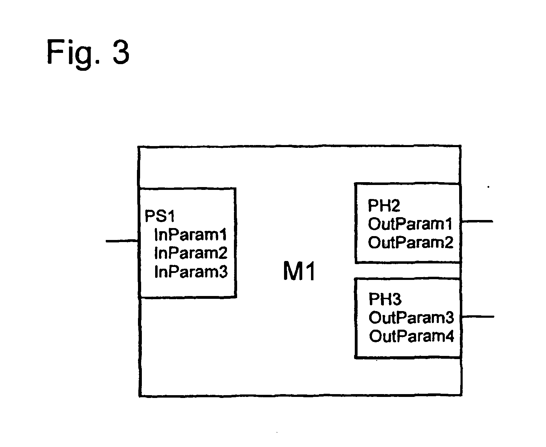

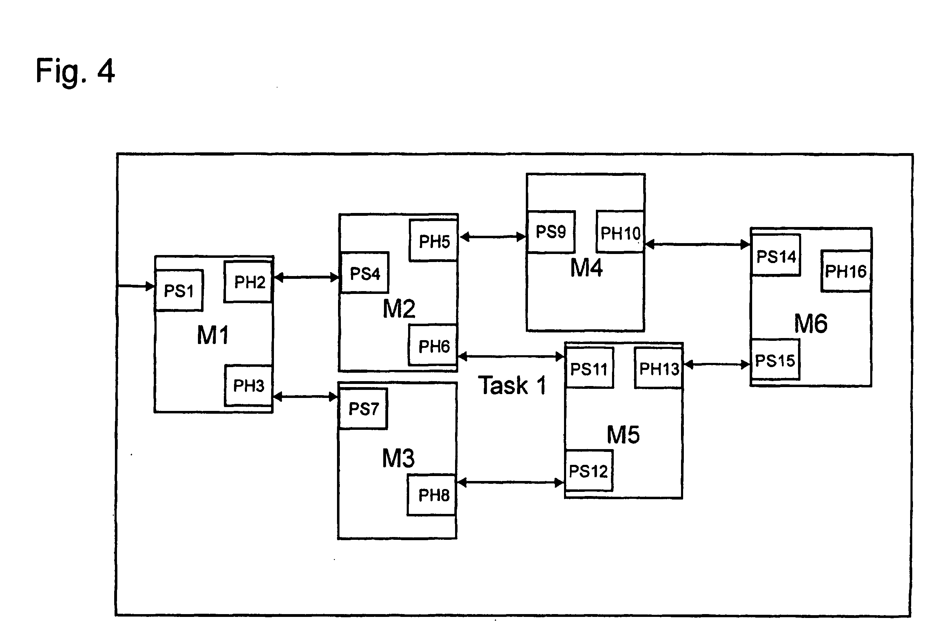

Figur 3 zeigt das Sicherheitsmodul M1 gemäß Figur 2 mit einer Eingangsschnittstelle und zwei Ausgangsschnittstellen, wobei die Eingangsschnittstelle drei Parameter und die beiden Ausgangsschnittstellen jeweils zwei Parameter umfassen, die jeweils vom Sicherheitsprotokoll gekapselt sind. Das Sicherheitsprotokoll verknüpft die verkapselten Eingangs- und Ausgangsschnittstellen, wie Figur 4 zeigt, gemäß den erforderlichen Sicherheitsstandards. Wenn z. B. das Sicherheitsprogramm auf einer Einprozessorhardware abläuft, sorgt das Sicherheitsprotokoll für eine doppelte Ausführung des Funktionsablaufs des Sicherheitsprogramms innerhalb des jeweiligen Sicherheitsmoduls. Der Datenfluss und die Abarbeitungsfolge des Steuerungstasks 1 erfolgt dabei in Figur 4 von links, dem Sicherheitsmodul M1, das die Prozessdaten von den Sensoren empfängt, nach rechts, zum Sicherheitsmodul M6, das die Prozesssignale, die den sicheren Zustand anzeigen, an die Aktoren ausgibt.

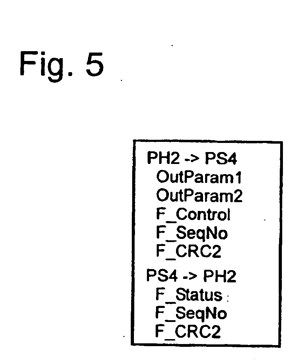

Eine Datenschnittstelle für die Verknüpfung der Sicherheitsmodule M2 und M4 ist weiter in Figur 5 dargestellt. Entsprechend dem Sicherheitsprotokoll werden die vom Sicherheitsmodul M2 auf das Sicherheitsmodul M4 zu übertragenen Daten mit einem Kontrollbit F_Control, einer Sequenznumber F_SeqNo und einer Prüfsummer F_CRC2 gekapselt. Damit das Sicherheitsmodul M2 feststellen kann, ob die Datenschnittstelle fehlerfrei ist, werden vom Sicherheitsmodul M4 zum Sicherheitsmodul M2 ein Statusbit F_Status, die Sequenznumber F_SequNo und die Prüfsumme F_CRC2 rückübertragen. Das vorgeschaltete Sicherheitsmodul M2 gibt also dem nachgeschalteten Sicherheitsmodul M4 die Sequenznumber F_SequNo und die Prüfsumme FCRC2 vor, die nach Empfang zurückgesendet werden müssen. Der Datenaustausch zwischen den beiden Sicherheitsmodulen M2, M4 muss dabei innerhalb einer vorbestimmten Zeit erfolgen, in der insbesondere die Sequenznumber vom Sicherheitsmodul M4 an das Sicherheitsmodul M2 zurückgemeldet werden muss. Im nächsten Zyklus wird sie dann zur Kontrolle des Datenaustausches vom Sicherheitsmodul M2 um 1 inkrementiert. Durch diese Vorgehensweise lässt sich zuverlässig feststellen, ob eine korrekte Datenübertragung zwischen den Sicherheitsmodulen M2 und M4 stattgefunden hat und/oder ob die Reihenfolge der Abarbeitung korrekt durchgeführt wurde.

Weiterhin ist nach dem Sicherheitsprotokoll festgelegt, dass die Prüfsumme für jede Verbindung zwischen zwei Sicherheitsmodulen unterschiedlich ist, um eine Vertauschung von Daten zu erkennen. Dazu bekommt jede Sicherheitsschnittstelle eine eindeutige Kennung, die in die Berechnung der Prüfsumme mit eingeht. Die Kennungen der Sicherheitsmodule werden dabei von einem Logiktool des Sicherheitsprotokolls vorgegebenen, das auch den Ablaufplan der Datenübertragung zwischen den Sicherheitsmodulen festlegt. Das Logiktool des Sicherheitsprotokolls gewährleistet, dass keine Kennung für die Sicherheitsmodule doppelt vergeben wird, und dass in einem Implementierungsschritt die daten- und ablauftechnische Verknüpfung der Sicherheitsmodule den Sicherheitsmodulen vorgegeben und die zugeordnete Kennung eingespeichert werden. Die Implementierung durch das Logiktool ist dabei vorzugsweise durch ein Passwort geschützt.

Durch die Erfindung ist es möglich, Sicherheitsfunktionen auf einfache Weise zu steuern, indem eine Aufteilung der Sicherheitsfunktionen auf eine Vielzahl von Sicherheitsmodulen erfolgen kann, die sich durch eine geringe Komplexität auszeichnen. Es ist dann nur erforderlich die einzelnen Sicherheitsmodule bzw. ihre Funktionalität für sich sicherheitstechnisch zu betrachten und zu zertifizieren. Eine sichere Kommunikation zwischen den Sicherheitsmodulen wird durch das Sicherheitsprotokoll gewährleistet, dass die Eingangs- und Ausgangsparameter der Sicherheitsmodule verkapselt und für einen sicheren Datenaustausch sorgt. Dieses Sicherheitsprotokoll legt weiterhin in eine Initialisierungsphase den Ablaufplan der Sicherheitsfunktionen zwischen den Sicherheitsmodulen fest.

## Patentansprüche

1. Verfahren zum Steuern von Sicherheitsfunktionen im Rahmen einer nicht auf Sicherheitsfunktionen ausgerichteten Systemsteuerung, die auf einem Automatisierungsrechner ausgeführt wird, wobei die Sicherheitsfunktionen in einem Sicherheitsprogramms zusammengefasst sind, das in Sicherheitsmodule mit einer fehlerfreien Funktionalität unterteilt ist, wobei ein Sicherheitsprotokoll, das eine Datenübertragung in Form von Sicherheitstelegrammen durchführt, bereitgestellt wird, wobei Eingangs- und der Ausgangsparameter jedes Sicherheitsmoduls durch das Sicherheitsprotokoll gekapselt und die einzelnen Sicherheitsmodule (M1...M6) über eine Datenübertragungsstrecke daten- und ablauftechnisch miteinander verknüpft werden, wobei der Datenaustausch zwischen den Sicherheitsmodule auf der Grundlage des Sicherheitsprotokoll erfolgt,
wobei in einem Implementierungsschritt vom Sicherheitsprotokoll die daten- und ablauftechnische Verknüpfung der Sicherheitsmodule entsprechend den zu steuernden Sicherheitsfunktionen des Systems festgelegt wird, wobei jedem Sicherheitsmodule (M1...M6) eine eindeutige Kennung zugewiesen wird.

2. Verfahren nach Anspruch 1, wobei das Sicherheitsprotokoll zur Übertragung der Sicherheitstelegramme Mechanismen gegen folgende Fehlerarten bei den übertragene Daten enthält: Wiederholung, Verlust, Einfügung, falsche Datenabfolge, Datenverfälschung, Datenverzögerung, Kopplung sicherheitsrelevanter und nicht sicherheitsrelevanter Daten und Falschadressierung.

3. Verfahren nach Anspruch 2, wobei das Sicherheitsprotokoll mittels einem Datenrahmen für die Sicherheitstelegramme folgende Sicherheitsmaßnahmen ausführt: Fortlaufende Durchnummerierung der Sicherheitstelegramme, Zeitüberwachung der Sicherheitstelegrammübertragung, Authentizitätsüberwachung der Sicherheitstelegrammübertragung und Sicherung der Datenintegrität der Sicherheitstelegramme mittels einer Prüfsumme.

4. Verfahren nach einem der Ansprüche 1 bis 3, wobei die Sicherheitsfunktionen durch logische Verknüpfung der Eingangs- und der Ausgangsparameter der Sicherheitsmodule realisiert werden.

5. Verfahren nach einem der Ansprüche 1 bis 4, wobei die fehlerfreien Funktionalität des Sicherheitsmoduls gewährleistet, dass ein Datenwert selbstständig den sicheren Zustand am Ausgang signalisieren, wenn ein falscher oder kein Datenwert am Eingang empfangen wird.

6. Verfahren nach einem der Ansprüche 1 bis 5, wobei die Eingangs- und der Ausgangsparameter jedes Sicherheitsmoduls im Rahmen des Initialisierungsvorgang festgelegt und im entsprechenden Sicherheitsmodule vor unberechtigtem Zugriff geschützt gespeichert werden.

7. Verfahren nach einem der Ansprüche 1 bis 6, wobei das Sicherheitsprotokoll für eine bidirektionale Datenübertragung in Form von Sicherheitstelegrammen zwischen den Sicherheitsmodulen ausgelegt ist.

8. Verfahren nach einem der Ansprüche 1 bis 7, wobei die Sicherheitsmodule für einen fehlerfreien Datendurchlauf ausgelegt sind.

9. Verfahren nach einem der Ansprüche 1 bis 8, wobei ein erstes Sicherheitsmodul als Eingangsschnittstelle für Prozesssignale und ein zweites Sicherheitsmodul als Ausgangsschnittstelle für Prozesssignale dient.

10. Verfahren nach einem der Ansprüche 1 bis 9, wobei das die Datenübermittlung zyklisch und deterministisch erfolgt, wobei die Daten für die Sicherheitsmodule priorisiert behandelt werden, so dass in einem Übermittlungszyklus zuerst alle Daten für die Sicherheitsmodule und dann Daten für Nicht-Sicherheitsfunktionen übergeben werden.

11. Vorrichtung zum Steuern von Sicherheitsfunktionen in einem Automatisierungssystem im Rahmen einer nicht auf Sicherheitsfunktionen ausgerichteten Systemsteuerung, die auf einem Automatisierungsrechner ausgeführt wird, wobei die Sicherheitsfunktionen in einem Sicherheitsprogramm zusammengefasst sind, umfassend Sicherheitsmodulen (M1...M6) mit einer fehlerfreien Funktionalität, in die das Sicherheitsprogramm unterteilt ist und die über eine Datenübertragungsstrecke daten- und ablauftechnisch miteinander verknüpft sind, ein Sicherheitsprotokoll, das eine Datenübertragung in Form von Sicherheitstelegrammen durchführt, bei dem Eingangs- und der Ausgangsparameter der Sicherheitsmodule durch das Sicherheitsprotokoll gekapselt sind, und
ein Logiktool des Sicherheitsprotokoll, das ausgelegt ist, in einem Implementierungsschritt vom Sicherheitsprotokoll die daten- und ablauftechnische Verknüpfung der Sicherheitsmodule entsprechend den zu steuernden Sicherheitsfunktionen des Systems festzulegen und jedem Sicherheitsmodule (M1...M6) eine eindeutige Kennung zuzuweisen.

## Claims

1. Method for controlling safety functions as part of a system controller which is not oriented to safety functions and which is executed on an automation computer, where the safety functions are combined in a safety program which is divided into safety modules having a sound functionality, where a safety protocol which transmits data in the form of safety messages is provided, where input parameters and the output parameter from each safety module are encapsulated by the safety protocol, and the individual safety modules (M1...M6) logically combined with one another in terms of data and flow by means of a data transmission link, the data interchange taking place between the safety modules on the basis of the safety protocol, where in an implementation step of the safety protocol the logic combination of the safety modules in terms of data and flow is stipulated in line with the system's safety functions which are to be controlled, each safety module (M1...M6) being assigned a unique identifier.

2. Method according to Claim 1, where for the purpose of transmitting the safety messages the safety protocol contains mechanisms against the following types of error in the transmitted data: repetition, loss, insertion, incorrect data sequence, data corruption, data delay, coupling between safety-related and non-safety-related data and incorrect addressing.

3. Method according to Claim 2, where the safety protocol uses a data frame for the safety messages to execute the following safety measures: consecutive numbering of the safety messages, time monitoring for the safety message transmission, authenticity monitoring for the safety message transmission and protection of the data integrity of the safety messages using a checksum.

4. Method according to one of Claims 1 to 3, where the safety functions are implemented through logic combination of the input and output parameters from the safety modules.

5. Method according to one of Claims 1 to 4, where the sound functionality of the safety module ensures that a data value independently signals the safe state at the output when an incorrect or no data value is received at the input.

6. Method according to one of Claims 1 to 5, where the input parameters and the output parameter from each safety module are stipulated as part of an initialization operation and are stored in a form protected against unauthorized access in the relevant safety module.

7. Method according to one of Claims 1 to 6, where the safety protocol is designed for bidirectional data transmission in the form of safety messages between the safety modules.

8. Method according to one of Claims 1 to 7, where the safety modules are designed for sound data passage.

9. Method according to one of Claims 1 to 8, where a first safety module is used as an input interface for process signals and a second safety module is used as an output interface for process signals.

10. Method according to one of Claims 1 to 9, where the data transmission takes place cyclically and deterministically, the data for the safety modules being handled in form prioritized fashion, so that in a transmission cycle all the data for the safety modules are transferred first and then data for non-safety functions are transferred.

11. Apparatus for controlling safety functions in an automation system as part of a system controller which is not oriented to safety functions and which is executed on an automation computer, where the safety functions are combined in a safety program, comprising safety modules (M1...M6) having a sound functionality, into which the safety program is divided, which are logically combined with one another in terms of data and flow by means of a data transmission link, comprising a safety protocol which transmits data in the form of safety messages, in which input parameters and the output parameter from the safety modules are encapsulated by the safety protocol, and comprising a logic tool in the safety protocol which is designed to stipulate, in an implementation step of the safety protocol, the safety modules' logic combination in terms of data and flow in line with the system's safety functions which are to be controlled and to assign a unique identifier to each safety module (M1...M6).

## Revendications

1. Procédé de commande de fonctions de sécurité dans le cadre d'une commande de système ne visant pas des fonctions de sécurité, laquelle est exécutée sur un calculateur d'automatisation, les fonctions de sécurité étant rassemblées dans un programme de sécurité, qui est divisé en modules de sécurité ayant une fonctionnalité sans défaut, un protocole de sécurité qui effectue une transmission de données sous la forme de télégrammes de sécurité étant mis à disposition, les paramètres d'entrée et le paramètre de sortie de chaque module de sécurité étant encapsulés par le protocole de sécurité et les divers modules de sécurité (M1...M6) étant combinés les uns aux autres du point de vue de la technique des données et de la technique de flux par une section de transmission de données, l'échange de données s'effectuant entre les modules de sécurité sur la base du protocole de sécurité,
dans un stade de mise en oeuvre du protocole de sécurité, la combinaison en technique de données et en technique de flux des modules de sécurité étant fixée en fonction des fonctions de sécurité à commander du système, une identification univoque étant attribuée à chaque module de sécurité (M1...M6).

2. Procédé suivant la revendication 1, dans lequel le protocole de sécurité destiné à la transmission des télégrammes de sécurité comporte des mécanismes à l'encontre des types d'erreurs suivants dans les données transmises : répétition, perte, insertion, succession fausse de données, falsification des données, retard des données, couplage des données pertinentes du point de vue de la sécurité et de celles qui ne le sont pas, et adressage erroné.

3. Procédé suivant la revendication 2, dans lequel le protocole de sécurité prend, au moyen d'un cadre de données, les mesures de sécurité suivantes pour les télégrammes de sécurité : numération continue des télégrammes de sécurité, surveillance dans le temps de la transmission des télégrammes de sécurité, contrôle d'authenticité de la transmission des télégrammes de sécurité et protection de l'intégralité des données des télégrammes de sécurité au moyen d'une somme de contrôles.

4. Procédé suivant l'une des revendications 1 à 3, dans lequel les fonctions de sécurité sont réalisées par combinaison logique des paramètres d'entrée et des paramètres de sortie des modules de sécurité.

5. Procédé suivant l'une des revendications 1 à 4, dans lequel la fonctionnalité sans défaut du module de sécurité garantit qu'une valeur de donnée signale automatiquement l'état sûr à la sortie, lorsqu'une valeur de donnée fausse est reçue à l'entrée ou lorsqu'une valeur de donnée n'est pas reçue à l'entrée.

6. Procédé suivant l'une des revendications 1 à 5, dans lequel les paramètres d'entrée et le paramètre de sortie de chaque module de sécurité sont fixés dans le cadre d'un processus d'initialisation et sont mémorisés de façon protégée vis-à-vis d'un accès non autorisé dans le module de sécurité correspondant.

7. Procédé suivant l'une des revendications 1 à 6, dans lequel le protocole de sécurité est conçu pour une transmission de données bidirectionnelle sous la forme de télégrammes de sécurité entre les modules de sécurité.

8. Procédé suivant l'une des revendications 1 à 7, dans lequel les modules de sécurité sont conçus pour un flux de données sans erreur.

9. Procédé suivant l'une des revendications 1 à 8, dans lequel un premier module de sécurité sert d'interface d'entrée pour des signaux de processus et un deuxième module de sécurité sert d'interface de sortie pour des signaux de processus.

10. Procédé suivant l'une des revendications 1 à 9, dans lequel la transmission de données s'effectue d'une manière cyclique et déterministe, les données pour les modules de sécurité étant traitées en étant priorisées, de sorte que, dans un cycle de transmission, d'abord toutes les données pour les modules de sécurité, puis des données pour des fonctions qui ne sont pas de sécurité sont transmises.

11. Dispositif de commande de fonctions de sécurité dans un système d'automatisation, dans le cadre d'une commande de système ne visant pas des fonctions de sécurité, laquelle est exécutée sur un calculateur d'automatisation, les fonctions de sécurité étant rassemblées dans un programme de sécurité, comprenant des modules (M1...M6) de sécurité ayant une fonctionnalité sans erreur en lesquels le programme de sécurité est divisé et qui sont combinés les uns aux autres du point de vue de la technique des données et de la technique de flux par le biais d'une section de transmission de données, un protocole de sécurité qui effectue une transmission de données sous la forme de télégrammes de sécurité, dans lequel les paramètres d'entrée et le paramètre de sortie des modules de sécurité sont encapsulés par le protocole de sécurité, et
un outil logique du protocole de sécurité qui est conçu pour, dans un stade de mise en oeuvre du protocole de sécurité, fixer la combinaison en technique de données et en technique de flux des modules de sécurité en fonction des fonctions de sécurité à commander du système et attribuer une identification univoque à chaque module de sécurité (M1...M6).
